# EUROPEAN PATENT APPLICATION

(11) **EP 4 704 044 A1**
(43) Date of publication of application: **04.03.2026**
(21) Application number: 24197635.6
(22) Date of filing: 30.08.2024
(51) Int. Cl.: G06V 10/774, G06V 10/82, G06V 20/56

(54) **A COMPUTER IMPLEMENTED METHOD AND COMPUTING DEVICE THEREOF**

(71) Applicant: Zenseact AB, 417 56 Göteborg (SE)
(72) Inventor: FRÄNDBERG, Vilhelm, 416 61 GÖTEBORG (SE); TONDERSKI, Adam, 426 53 VÄSTRA FRÖLUNDA (SE); JOHNANDER, Joakim, 587 37 LINKÖPING (SE)
(74) Representative: Zacco Sweden AB

(57) **Abstract**

The present invention at least relates to a computer-implemented method (100), as well as a computing device (200) thereof. The method (100) comprises obtaining (S102) a second dataset comprising a set of sensor data sequences, wherein each sensor data sequence comprises sensor data samples depicting a physical environment over a plurality of time instances, each sensor data sample having an associated annotation, generated by processing the sensor data sample through a first machine learning model being trained, using a first dataset, to perform a perception task, wherein the perception task comprises generating a prediction of a sensor data sample for a given time instance, given said sensor data sample as input; training (S104), using the second dataset, a second machine learning model to perform an augmented perception task, wherein the augmented perception task comprises generating a prediction of a sensor data sample for a time instance of a plurality of time instances of a sensor data sequence, given the remaining sensor data samples of said sensor data sequence as input; fine-tuning (S106), using a third dataset, the second machine learning model, to perform the perception task, wherein the third dataset comprises sensor data samples depicting a physical environment and that are annotated for the perception task; and providing (S108) the fine-tuned second machine learning model as a model for annotating training data for subsequent training of a production model, of an automated driving system, to perform the perception task.

## Description

### TECHNICAL FIELD

The present inventive concept relates to the field of autonomous vehicles. In particular, it is related to methods and devices for annotation of training data for use in training of a production model.

### BACKGROUND

With the development of technology in recent years, image capturing and processing techniques have become widely used in different fields of technology. In particular, vehicles produced today are commonly equipped with some form of vision or perception system for enabling new functionalities. Moreover, an increasing portion of modern vehicles has advanced driver-assistance systems (ADAS) to increase vehicle safety and more generally road safety. ADAS - which for instance may be represented by adaptive cruise control (ACC), collision avoidance system, forward collision warning, lane support systems, etc. - are electronic systems that may aid a driver of the vehicle. Today, there is ongoing research and development within a number of technical areas associated to both the ADAS and the Autonomous Driving (AD) field. ADAS and AD may also be referred to under the common term Automated Driving System (ADS) corresponding to all of the different levels of automation as for example defined by the SAE J3016 levels (0 - 5) of driving automation.

Some functions of these system can be implemented using simple rule-based techniques. However, to handle the complexity of real-world driving scenarios, which involves varying road conditions, unpredictability in human or non-human behavior, and rapidly changing environments, the use of machine learning models has proven to enhance the safety, capability and performance of the ADS. Machine learning models, such as deep learning models or neural networks are especially useful as part of the perception system of the ADS for e.g. detecting, identifying, or tracking objects in the surrounding environment of the vehicle.

Solving the perception tasks necessary to achieve autonomous driving with deep learning algorithms requires a vast quantity of labeled training data, with high diversity and quality. Such datasets need to cover any imaginable scenario that might present itself while driving. Collecting the data is a relatively easy task. However, annotating the data to make it useful for training of a machine learning model is many orders of magnitude more expensive, as it typically requires human involvement. These problems are only made worse when moving to spatiotemporal models which require annotated sequence data, bringing a new dimension to the annotation cost. One of the holy grails in the development of AD is therefore to find ways of doing this in an automated manner. The present inventive concept provides techniques for acquiring high-fidelity annotation in a more automated manner, which can remove or drastically reduce the need for human involvement.

### SUMMARY

The herein disclosed technology seeks to mitigate, alleviate, or eliminate one or more of the above-identified deficiencies and disadvantages in the prior art to address various problems relating to acquiring annotated training data. Recent advances in large language models have demonstrated the fact that deep learning is at its most powerful when there is no clear limitation to the scale of the model or the size of its input dataset. The inventors have realized that these aspects can be utilized also in other areas, such as in the field of autonomous driving development for annotation of data. The presently disclosed technology at least partly builds upon leveraging easy to collect data to train a large machine learning model to be able to annotate training data which can then be used to train a production model used in a vehicle equipped with an automated driving system, ADS.

In short, it has been realized that a first model, trained in some way to perform a main task, can be used to auto-label (or auto-annotate) a large amount of data. The main task being to perform present-time prediction, or instantaneous predictions. Then, this data can be utilized for pre-training a larger second model to make similar predictions, but into the future (or past). In other words, the second model can be trained to perform an auxiliary task, namely doing future prediction of the main task. From this, the second model can build an extensive understanding of the dynamics of the real world around the vehicle. The second model can then be fine-tuned to perform the main task, and later used to auto-label large amounts of data. This training scheme thus provides a model that can generate more accurate auto-labels than what the first model could do. As the auxiliary task is very well aligned with the main task (solving the main task into the future), better preservation of relevant information in the inner states of the second (larger) model, which can lead to better performance on the main task in the fine-tuned second model. In the end, this can lead to better auto-labeling and in extension better performance of a final production model trained on the auto-labeled training data generated through the fine-tuned second model.

Various aspects and embodiments of the disclosed invention are defined below and in the accompanying independent and dependent claims.

According to a first aspect, there is provided a computer-implemented method. The method comprises obtaining a second dataset comprising a set of sensor data sequences. Each sensor data sequence comprises sensor data samples depicting a physical environment over a plurality of time instances. Each sensor data sample having an associated annotation, generated by processing the sensor data sample through a first machine learning model being trained, using a first dataset, to perform a perception task. The perception task comprises generating a prediction of a sensor data sample for a given time instance, given said sensor data sample as input. The method further comprises training, using the second dataset, a second machine learning model to perform an augmented perception task. The augmented perception task comprises generating a prediction of a sensor data sample for a time instance of a plurality of time instances of a sensor data sequence, given the remaining sensor data samples of said sensor data sequence as input. The method further comprises fine-tuning, using a third dataset, the second machine learning model, to perform the perception task. The third dataset comprises sensor data samples depicting a physical environment and that are annotated for the perception task. The method further comprises providing the fine-tuned second machine learning model as a model for annotating training data for subsequent training of a production model, of an automated driving system, to perform the perception task.

According to a second aspect, there is provided a computer program product comprising instructions which when the program is executed by a computing device, causes the computing device to carry out the method according to any embodiment of the first aspect. According to an alternative embodiment of the second aspect, there is provided a (non-transitory) computer-readable storage medium. The non-transitory computer-readable storage medium stores one or more programs configured to be executed by one or more processors of a processing system, the one or more programs comprising instructions for performing the method according to any embodiment of the first aspect. Any of the above-mentioned features and advantages of the other aspects, when applicable, apply to the second aspect as well. In order to avoid undue repetition, reference is made to the above.

According to a third aspect, there is provided a computing device. The computing device comprises control circuitry. The control circuitry is configured to obtain a second dataset comprising a set of sensor data sequences. Each sensor data sequence comprises sensor data samples depicting a physical environment over a plurality of time instances. Each sensor data sample having an associated annotation, generated by processing the sensor data sample through a first machine learning model being trained, using a first dataset, to perform a perception task. The perception task comprises generating a prediction of a sensor data sample for a given time instance, given said sensor data sample as input. The control circuitry is further configured to train, using the second dataset, a second machine learning model to perform an augmented perception task. The augmented perception task comprises generating a prediction of a sensor data sample for a time instance of a plurality of time instances of a sensor data sequence, given the remaining sensor data samples of said sensor data sequence as input. The control circuitry is further configured to fine-tune, using a third dataset, the second machine learning model, to perform the perception task. The third dataset comprises sensor data samples depicting a physical environment and that are annotated for the perception task. The control circuitry is further configured to provide the fine-tuned second machine learning model as a model for annotating training data for subsequent training of a production model, of an automated driving system, to perform the perception task. Any of the above-mentioned features and advantages of the other aspects, when applicable, apply to this third aspect as well. In order to avoid undue repetition, reference is made to the above.

The term "non-transitory," as used herein, is intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link. Thus, the term "non-transitory", as used herein, is a limitation of the medium itself (i.e., tangible, not a signal) as opposed to a limitation on data storage persistency (e.g., RAM vs. ROM).

The disclosed aspects and preferred embodiments may be suitably combined with each other in any manner apparent to anyone of ordinary skill in the art, such that one or more features or embodiments disclosed in relation to one aspect may also be considered to be disclosed in relation to another aspect or embodiment of another aspect. Moreover, any advantages mentioned in connection with one aspect, when applicable, applies to the other aspects as well.

A possible advantage of some embodiments is that it enables annotation of training data with less need for human involvement. This in turn can reduce the risk of human errors, as well as enabling faster annotation processes.

A further possible advantage of some embodiments is that the provided fine-tuned second machine learning model can be used for generating auto-annotations in a more powerful (e.g. in the sense of capability, accuracy and general performance) way than any auto-annotations models trained only on a limited set of manually labeled data. Instead, it leverages vast amounts of easily obtainable training data for learning a more complex augmented perception task. The augmented perception task allows the model to build extensive knowledge of the world (including e.g. the dynamics and temporal evolution of the environment), which it can then leverage, after fine-tuning on the main perception task, in generating accurate predictions for use as annotation data.

Moreover, the augmented perception task is well aligned with the main perception task, thereby reducing the risk of the model learning unnecessary, or otherwise less important aspects of the environment.

Further embodiments are defined in the dependent claims. It should be emphasized that the term "comprises/comprising" when used in this specification is taken to specify the presence of stated features, integers, steps, or components. It does not preclude the presence or addition of one or more other features, integers, steps, components, or groups thereof.

These and other features and advantages of the disclosed technology will, in the following, be further clarified with reference to the embodiments described hereinafter.

### BRIEF DESCRIPTION OF THE DRAWINGS

The above aspects, features and advantages of the disclosed technology, will be more fully appreciated by reference to the following illustrative and non-limiting detailed description of example embodiments of the present disclosure, when taken in conjunction with the accompanying drawings, in which:
Figure 1 is a schematic flowchart representation of a method, in accordance with some embodiments.
Figure 2 is a schematic illustration of a computing device, in accordance with some embodiments.
Figure 3 is a schematic illustration of a vehicle, in accordance with some embodiments.
Figure 4 is a schematic illustration of a system, in accordance with some embodiments.
Figures 5A to 5F illustrates, by way of example, schematic diagrams over different sub-processes of the disclosed technology.

### DETAILED DESCRIPTION

The present disclosure will now be described in detail with reference to the accompanying drawings, in which some example embodiments of the disclosed technology are shown. The disclosed technology may, however, be embodied in other forms and should not be construed as limited to the disclosed example embodiments. The disclosed example embodiments are provided to fully convey the scope of the disclosed technology to the skilled person. Those skilled in the art will appreciate that the steps, services and functions explained herein may be implemented using individual hardware circuitry, using software functioning in conjunction with a programmed microprocessor or general-purpose computer, using one or more Application Specific Integrated Circuits (ASICs), using one or more Field Programmable Gate Arrays (FPGA) and/or using one or more Digital Signal Processors (DSPs).

It will also be appreciated that when the present disclosure is described in terms of a method, it may also be embodied in apparatus comprising one or more processors, one or more memories coupled to the one or more processors, where computer code is loaded to implement the method. For example, the one or more memories may store one or more computer programs that causes the apparatus to perform the steps, services and functions disclosed herein when executed by the one or more processors in some embodiments.

It is also to be understood that the terminology used herein is for purpose of describing particular embodiments only, and is not intended to be limiting. It should be noted that, as used in the specification and the appended claim, the articles "a", "an", "the", and "said" are intended to mean that there are one or more of the elements unless the context clearly dictates otherwise. Thus, for example, reference to "a unit" or "the unit" may refer to more than one unit in some contexts, and the like. Furthermore, the words "comprising", "including", "containing" do not exclude other elements or steps. It should be emphasized that the term "comprises/comprising" when used in this specification is taken to specify the presence of stated features, integers, steps, or components. It does not preclude the presence or addition of one or more other features, integers, steps, components, or groups thereof. The term "and/or" is to be interpreted as meaning "both" as well and each as an alternative.

It will also be understood that, although the term first, second, etc. may be used herein to describe various elements or features, these elements should not be limited by these terms. These terms are only used to distinguish one element from another. For example, a first dataset could be termed a second dataset, and, similarly, a second dataset could be termed a first dataset, without departing from the scope of the embodiments. The first dataset and the second dataset are both datasets, but they are not the same dataset.

As used herein, the wording "one or more of" a set of elements (as in "one or more of A, B and C" or "at least one of A, B and C") is to be interpreted as either a conjunctive or disjunctive logic. Put differently, it may refer either to all elements, one element or combination of two or more elements of a set of elements. For example, the wording "one or more of A, B and C" may be interpreted as A or B or C, A and B and C, A and B, B and C, or A and C.

### Overview

The disclosed technology relates to techniques for generating annotated training data for use in development of automated driving systems in an automated manner. The disclosed technology is at least partly based upon the idea of training a large machine learning model on an auxiliary perception task, closely related to a main task for which annotated training data is desired. To illustrate the techniques behind the disclosed technology, the following examples are given.

Consider a scenario where given a limited dataset of 1 million scenes, that are manually labeled for solving a (main) perception task. Such datasets are today readily available. One option is to use this dataset to directly train a production model to perform said perception task. Given the limited amount of training data, the resulting production model will likely not be able to handle a diverse set of scenarios that can occur in the real-world. Another option, as earlier proposed by the inventors, is to first pre-train a large model on an auxiliary task (such as predicting future trajectory of the vehicle, or generating synthetic sensor data for future time instances, given sensor data of earlier time instances). Training data for this can be acquired relatively easily, as it does not require manually annotated data. Then the large model can be fine-tuned to solve the main perception task on the dataset of 1 million scenes. The resulting model can then become capable to be used to auto-annotate a larger number of scenes (i.e. larger than the dataset of 1 million scenes), which in turn can be used to train the production model. Thereby, the production model can be trained on a larger dataset, which can lead to a more performant model.

The gain from the pre-training of the large model will be directly related to how well the auxiliary task aligns with the main task. If the auxiliary task differs from the main task, there is a risk that the large model during its pre-training learns to focus on things that are of less importance, and misses other things that are of greater importance for the main perception task. As an example, say that the main perception task is to detect all objects in the surrounding environment of the vehicle. If the auxiliary task is to predict the future trajectory of the vehicle, it may not need to consider all road users in the surrounding environment. Thus, the large model may miss to represent some of the objects in its internal states.

Another option is to train the large model to solve the main task using the 1 million manually labeled scenes, use that model to auto-label a larger number of scenes and then train the production model to solve the main task on the larger number of auto-labeled scenes. This is a form of knowledge distillation and is a known trick to improve performance, but a problem compared to the previous option is that the performance of the large model is still strictly limited by the amount and quality of manually labeled data.

What the inventors propose is another option. Given a first model (model 1) trained in some way to perform the main task as well as possible (e.g. by being trained on the 1 million dataset), this model can be used to auto-annotate a larger dataset of sequences of sensor data. Then, a second (larger) model (model 2) can be trained, using the generated dataset, to predict how the auto-labels from model 1 will look some time into the future (or past). This auxiliary task can essentially be seen as solving the main perception task in the future (or past). This will give model 2 a deeper understanding of the dynamics of the world, as it has to learn the movement of objects, while still performing the main perception task. Then, just as in one of the previous options, the second model can be fine-tuned to solve the main perception task on the 1 million scenes, generate (automatically) annotations for a larger number of scenes and then train a production model on these larger number of auto-labeled scenes. Given the larger number of scenes, the production model will become more performant than model 1 trained on the limited dataset of manually annotated training samples.

The inventors have found that, even if model 1 would have limited performance, when the auxiliary task is to predict the output of model 1 into the future, it will not have a substantial impact on the training of model 2, since the task of predicting the future output of model 1 will be much more difficult to solve than the task the model 1 has been trained to perform (i.e. solving the main task for the current/present time instance). Taking this into account, the output of model 1 can be good enough to use as target for model 2, which enables model 2 to be pre-trained on an auxiliary task that is very well aligned with the main task. Moreover, it allows model 2 to obtain a deeper understanding of the dynamics of the world, such as the behavior and features of all objects on the road, as well as the road itself, and the surrounding environment.

### Definitions

Throughout the present disclosure, reference is made to machine learning models (or just "models"). By the wording "machine learning model" it is herein meant any form of machine learning algorithm, such as deep learning models, neural networks, or the like, which is able to learn and adapt from input data and subsequently make predictions, decisions, or classifications based on new data. In general, the machine learning model, as used herein, may be any neural network-based model which operates on sensor data of an autonomous vehicle.

Deployment of a machine learning model typically involves a training phase where the model learns from labeled or unlabeled training data to achieve accurate predictions during the subsequent inference phase. The training data (and input data during inference) may e.g. be an image, or sequence of images, LIDAR data (i.e. a point cloud), radar data etc. Furthermore, the training/input data may comprise a combination or fusion of one or more different data types. Additionally, or in combination, it may comprise a combination or fusion of two or more instances of the same data types, such as two or more images from different cameras. The training/input data may for instance comprise both an image depicting a scene of a surrounding environment of the vehicle, and corresponding LIDAR point cloud of the same scene.

The machine learning model may be implemented in some embodiments using publicly available suitable software development machine learning code elements, for example, such as those which are available in Pytorch, TensorFlow, and Keras, or in any other suitable software development platform, in any manner known to be suitable to someone of ordinary skill in the art.

As used herein, the wording "perception model" herein refers to a computational system or algorithm designed to perceive or interpret an environment depicted in sensor data, such as digital images, video frames, LIDAR data, radar data, ultrasonic data, or other types of visual data relevant for driving of the vehicle. In other words, the perception model may be designed to detect, locate, identify and/or recognize instances of specific objects within the sensor data, vehicle lanes, relevant signage, appropriate navigation paths, etc. Thus, the perception model may be configured to perform a perception task of an automated driving system, ADS, of a vehicle. In other words, the perception model may be a machine learning model configured (or trained) to perform a perception task. It is to be appreciated that the perception model may be configured to perform one or more perception tasks. Examples of perception tasks include, but are not limited to object detection, object classification, lane estimation, free-space estimation, trajectory prediction, obstacle avoidance, path planning, scene classification, traffic sign classification, 3D scene flow, and occupancy prediction. Thus, the machine learning model may be an object detection model, an object classification model, a lane estimation model, a free-space estimation model, a trajectory prediction model, an obstacle avoidance model, a path planning model, a scene classification model, a traffic sign classification model, a 3D scene flow model, or an occupancy prediction model. The perception model may employ a combination of advanced techniques from computer vision, machine learning, and pattern recognition to analyze the visual sensor data and output e.g. bounding boxes or regions of interest around objects of interest present in the input imagery. The perception model may be further configured to classify what type of object is detected. The perception model may encompass different architectures, including but not limited to convolutional neural networks (CNNs), recurrent neural networks (RNNs), transformers, and other existing or future alternatives.

The output of the perception model may be used in a downstream task or by a downstream system of the ADS, such as in trajectory prediction, path planning, emergency brake systems, etc. In some embodiments, the perception model may be part of an end-to-end model configured to (as opposed to above) perform both a perception task and a downstream task. For example, the machine learning model may perform trajectory prediction or path planning based on the sensor data directly.

In the following, reference will be made to a "production" model by which it is herein meant a machine learning model intended to be deployed in the vehicle, i.e. to be used in production. The production model may also be referred to as an "online" model. The production model (or online model) can thus be construed as a model deployed at the edge, i.e. directly on an edge device, in this case an ADS equipped vehicle. In other words, the computations of the production model are performed close locally, close to the data source. In contrast, an offline model refers to a model deployed e.g. at a remote server (such as a cloud server, central server, back-office server, fleet server, or back-end server).

The production model (or online model) can operate in real-time, by processing incoming data from the vehicle's sensors as it is received. This model can be responsible for making immediate driving decisions based on the current environment and situational context. A key characteristic of production models is that they should be able to operate with low latency, i.e. with minimal delay, to ensure timely responses to dynamic driving conditions. Moreover, as the production models are deployed in the vehicle, they typically need to be executable on limited computational resources and with limited memory. For this reason, such models are typically relatively small or simple, e.g. in terms of the number of parameters, architecture complexity, number of layers, etc.

An "offline" model, on the other hand, herein refers to a model that is developed and trained using pre-collected data. This model is not designed for real-time decision-making but rather for tasks such as training, testing, simulation, and validation. As the model is not intended to be used in production at an edge device, the execution speed is not of significant importance. Instead, the offline model can be run independently, during a development process, with a focus on achieving high performance on whatever task the offline model performs. In addition, the offline model can be executed in a back-office environment, meaning there are more available computing resources. In fact, offline models typically utilize powerful computing resources, including GPUs and distributed computing systems, to handle the intensive computations required for the execution of the offline model. For these reasons, the offline models are typically relatively large or more complex, as compared to production models for instance. In fact, there may be no clear limit to the size of the offline perception model as it could even be parallelized across several computational devices. In the present disclosure, the second machine learning model (as referred to below) can be seen as an offline model.

The wording "annotation" as used herein, refers to the process of adding some form of metadata or tags to data to make it understandable and usable for machine learning algorithms. This process may e.g. involve assigning specific categories or other meta data to a piece of data (e.g. a training sample), such as bounding boxes, segmenting areas, etc. The metadata can be used to enrich the sensor data in this case, to make it useful for training and evaluating machine learning models. This can include associating labels for identifying e.g. an object in the image, or determining bounding boxes or assigning segmentation data. The wording "labeling" or "labels" can thus be seen as at least a subset of data annotation. The term "label" (or "labeling") and the term "annotation" (or "annotating") can thus be used interchangeably within the present disclosure. More specifically, labeling can refer to the process of assigning one or more labels or categories to data instances (such as sensor data). For example, in image classification, labeling involves tagging images with their respective classes (e.g., cat, dog, or car).

Manually annotated (or labeled) data herein refers to data that has been annotated though a mainly manual (i.e. performed by a human) process. Such process may e.g. involve presenting a human with an image to be annotated, and receiving annotation data (such as an object class or bounding boxes) from the human. Such annotations are traditionally costly and time-consuming. In contrast, auto-annotated data herein refers to data that has been annotated through a mainly automated process. Such process may e.g. involve feeding an image to be annotated to a machine learning model, which is trained to output annotation data associated with the image.

The second machine learning model (before it is fine-tuned) can be seen as a so-called foundation model. The wording "foundation model", herein refers to a machine learning model that can serve as a base or core architecture upon which more specialized or customized machine learning models (e.g. the fine-tuned second machine learning model) are built. The foundation model may also be commonly known as a "base model" or "general-purpose model". The foundational model is typically pre-trained (often by self-supervised or semi-supervised learning) on a vast and diverse dataset at scale to learn general patterns, features, or representations of data. These learned representations can be leveraged and fine-tuned for a wide range of specific tasks, such as natural language processing, image recognition, recommendation systems, and various other applications. Foundation models are typically characterized by their large model size, including a vast number of trainable parameters. The model size and complexity contribute to its ability to capture intricate patterns and representations from extensive datasets. As a non-limiting example, the foundation model may build upon a convolutional neural network (CNN), such as a Residual Neural Network (commonly known in the art as ResNet), and/or on one or more transformer models (or other attention-based models). For example, images captured by of one or more cameras of the vehicle may be fed to the CNN to encode them. Alternatively, a vision transformer may be used. Then a LIDAR point cloud and/or radar scan corresponding to the physical environment depicted in the image(s) may be encoded by another CNN (e.g. via voxelizing/scattering the point cloud onto a grid) or a different model (such as point-nets or transformers configured to handle point clouds). In some embodiments, the encoded image(s), LIDAR point cloud, and/or radar scan may be fed to a transformer model (or other types of models), which can build a unified abstract representation of the physical environment. The unified abstract representation can be seen as a fusion of the different types of encoded data. The transformer model may further take into account encoded sensor data, or the sensor data itself, of previous time instances. As a non-limiting example, the so called BEVFormer (presented by Li et al.) may be used. The unified abstract representation may then be further processed by the above-mentioned transformer model, or a further transformer model, before providing an output of the foundation model. In summary, arbitrary large models (e.g. CNNs) can be used to encode the sensor data. One or more transformer models or arbitrary size may then be used to interpret and/or fuse the encoded sensor data. The size of the models can, in reality, be limited by the available GPY memory, or other hardware constraints. Training such a foundation model can be done end-to-end. In other words, the entire model can be trained simultaneously as a whole. It goes without saying that the above example of a foundation model structure is only to be seen as a non-limiting example, as many alternatives are also possible, as readily appreciated by the person skilled in the art.

In essence, a foundation model can employ a transfer learning approach where knowledge gained from one domain or task can be transferred and adapted to improve performance in another domain or task. The disclosed technology aims to have these two tasks as well aligned as possible, to push the performance of the models even further. The concept of a foundation model plays a crucial role in the efficiency and effectiveness of machine learning systems, enabling faster development and improved performance across a spectrum of applications through the reuse of learned features and representations.

### Embodiments

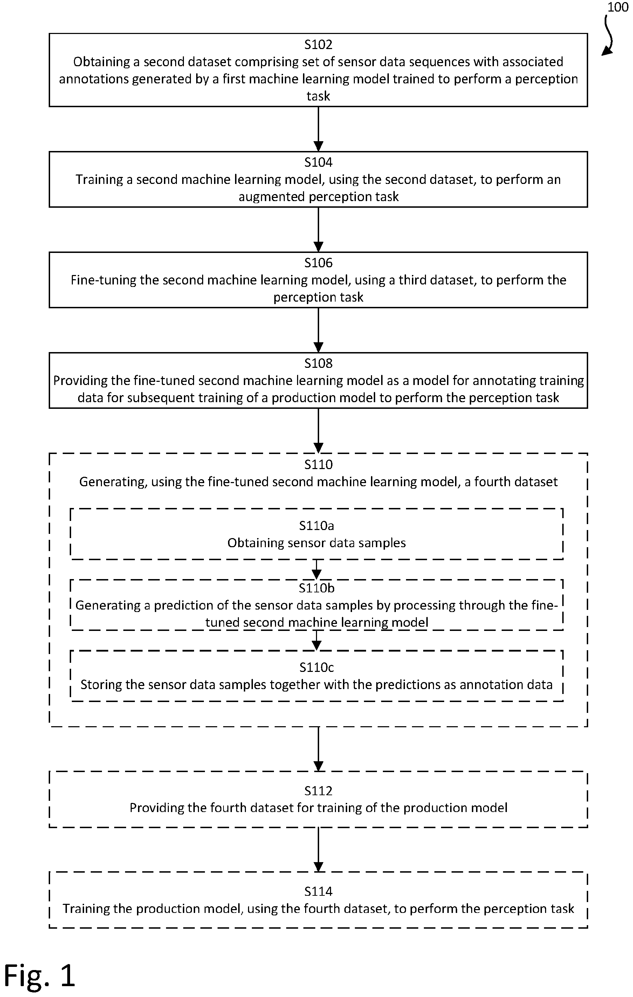

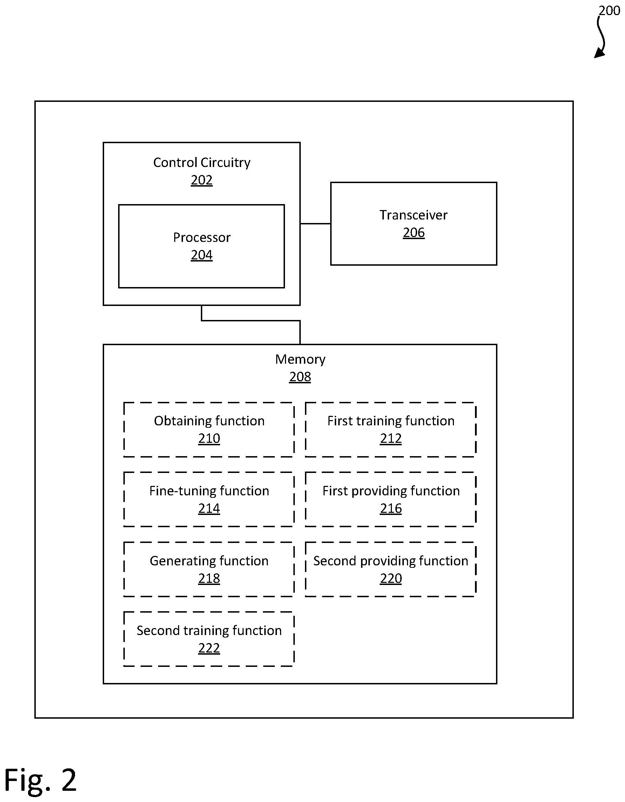

Figure 1 is a schematic flowchart representation of a computer-implemented method 100. The method 100 may be a method for providing a model for subsequent annotation of training data. The model for use in subsequent annotation of training data may also be referred to as an offline model. More specifically, this model refers to the fine-tuned second machine learning model, referred to below. The training data may in turn be used in subsequent training of a production model (or online model), of an automated driving system, to perform a perception task. The method 100 may be performed by a device 200 as described below in connection with Fig. 2. More generally, the method 100 may be performed by any suitable computing device, such as a remote server. Advantageously, the server is a device having more available computational resources than an ADS equipped vehicle. This may facilitate deployment of a more computational heavy offline model. The production model trained on the annotated training data can instead be deployed in the vehicle.

Below, the different steps of the method 100 are described in more detail. Even though illustrated in a specific order, the steps of the method 100 may be performed in any suitable order as well as multiple times. Thus, although Fig. 1 may show a specific order of method steps, the order of the steps may differ from what is depicted. In addition, two or more steps may be performed concurrently or with partial concurrence. Such variation will depend on the software and hardware systems chosen and on designer choice. All such variations are within the scope of the invention. Likewise, software implementations could be accomplished with standard programming techniques with rule-based logic and other logic to accomplish the various steps. Further variants of the method 100 will become apparent from the present disclosure. The herein mentioned and described embodiments are only given as examples and should not be limiting to the present invention. Other solutions, uses, objectives, and functions within the scope of the invention as claimed below described patent claims should be apparent for the person skilled in the art.

The method 100 comprises obtaining S102 a second dataset comprising a set of sensor data sequences. Each sensor data sequence comprises sensor data samples depicting a physical environment over a plurality of time instances. In other words, the second dataset comprises a number of sensor data sequences, where each sensor data sequence can be seen as a training sample. Each sensor data sequence then comprises sensor data samples for a plurality of consecutive time instances, i.e. for a sequence of time instances. Each sensor data sample may thus be associated with one time instance of the plurality of time instances. Moreover, each sensor data sample has an associated annotation. The associated annotation having been generated by processing the sensor data sample through a first machine learning model being trained, using a first dataset, to perform a perception task. In other words, the prediction generated by the first machine learning model can be used as the annotation. Thus, the second dataset can be seen as an automatically annotated dataset. The perception task comprises generating a prediction of a sensor data sample for a given time instance, given said sensor data sample as input. The perception task may also be referred to as the main perception task. The first dataset thus comprises training data annotated for said perception task. The first dataset may be manually annotated dataset.

A sensor data sample may comprise a sensor data frame of sensor data of one or more sensor data types. The sensor data may comprise one or more of image data, LIDAR data, radar data, and ultrasonic data. For example, the sensor data sample may be an image captured by an onboard camera of a vehicle. The sensor data sample may further comprise an image captured by a different onboard camera at the same time instance, or any other sensor data captured by any other on-board sensors at said time instance. The sensor data samples may comprise raw sensor data. Alternatively, the sensor data samples may comprise processed or fused sensor data of two or more different types of sensor data.

The physical environment (or surrounding environment) of the vehicle can be understood as a general area around the vehicle in which objects (such as other road users, landmarks, obstacles, etc.) can be detected and identified by vehicle sensors (radar sensor, LIDAR sensor, camera(s), etc.), i.e. within a sensor range of the vehicle. The sensor data depicts the physical environment in the sense that the sensor data reflects one or more properties of the physical environment, e.g. by depicting one or more objects in the physical environment.

The wording "obtaining" is throughout the present disclosure to be interpreted broadly and encompasses receiving, retrieving, collecting, acquiring, and so forth directly and/or indirectly between two entities configured to be in communication with each other or further with other external entities. However, in some embodiments, the term "obtaining" is to be construed as determining, deriving, forming, computing, etc. Thus, as used herein, "obtaining" may indicate that a parameter is received at a first entity/unit from a second entity/unit, or that the parameter is determined at the first entity/unit e.g. based on data received from another entity/unit. In some embodiments, the sensor data is obtained by being received from a vehicle having collected the sensor data. The vehicle may be part of a fleet of vehicles configured to collect sensor data for use as training data. It is to be noted that the vehicle having collected the sensor data need not to be the same vehicle as being provided with the production model referred to below. In some embodiments, the sensor data is obtained by being retrieved from a database. In other words, the database may comprise sensor data already collected by one or more vehicles, or by any other collecting means.

The method 100 further comprises training S104 (may also be referred to as pre-training), using the second dataset, a second machine learning model to perform an augmented perception task. The augmented perception task may also be referred to as an auxiliary perception task. The augmented perception task comprises generating a prediction of a sensor data sample for a time instance of a plurality of time instances of a sensor data sequence, given the remaining sensor data samples of said sensor data sequence as input. Put differently, the augmented perception task comprises generating a prediction for one (or more) sensor data samples of a sensor data sequence, given the other sensor data samples (of the same sensor data sequence) as input.

In other words, the second machine learning model can be trained to predict the results of the (main) perception task for a sensor data sample of a time instance of the plurality of time instances of a sensor data sequence, given the sensor data samples of the remaining time instances of said plurality of time instances as input.

Training S104 the second machine learning model may thus involve processing the sensor data sequences of the second dataset through the second machine learning model to generate predictions by the above-mentioned augmented perception task. During training, the annotation associated with the sensor data sample(s) to be predicted is used as ground truth.

The main perception task described above can be seen as an instantaneous or present-time prediction, as it generates predictions for the same time instance for which it has received sensor data samples as input. In contrast, the augmented perception task can be seen as a future (or past) prediction, as it generates predictions for future (or past) time instances from the sensor data samples given as input.

The method 100 further comprises fine-tuning S106, using a third dataset, the second machine learning model, to perform the perception task. The third dataset comprises sensor data samples depicting a physical environment and that are annotated for the perception task. The third dataset may be a manually annotated dataset. In some embodiments, the third dataset is the same dataset as the first dataset. The second machine learning model may thus be fine-tuned by processing the third dataset through the second machine learning model, and updating the model based on a comparison between model predictions and corresponding annotation serving as ground truth. This can thus be done through a supervised learning approach, as is readily realized by the person skilled in the art.

Fine-tuning the second machine learning model allows the already pre-trained second machine learning model to be adapted to the main perception task. Fine-tuning may involve training a part of the pre-trained second machine learning model, such as any task specific layers added to the model. Before doing so, the already pre-trained parameters of the second machine learning model may be frozen, so that they don't change during the fine-tuning process. Thereby, the fine-tuning of the second machine learning model allows trainable parameters (e.g. model weights) of the task specific layer(s) to be learned. Alternatively, the entire second machine learning model may be trained during the fine-tuning. In other words, one or more trainable parameters of the pre-trained second machine learning model may be updated during fine tuning.

The method 100 further comprises providing S108 the fine-tuned second machine learning model as a model for annotating training data for subsequent training of a production model to perform a perception task. The production model may be used as part of an automated driving system. The fine-tuned second machine learning model can thus be used to generate auto-annotations that can be used for training the production model to perform the main perception task. Due to how the fine-tuned second machine learning model is formed, it can be capable to generate auto-annotations of greater accuracy/quality than the first machine learning for instance.

As mentioned in the foregoing, the first and third dataset may be manually annotated dataset, whereas the second dataset may be an automatically annotated dataset. Manually annotated datasets are typically of high quality (e.g. in terms of accuracy). In the disclosed technology, these datasets can be used where accuracy is of importance, but the amount of available training data is not as crucial. Automatically annotated datasets can typically be generated in vast amounts, as they are only really limited by computational resources and the collection of the raw sensor data. In the disclosed technology, these types of datasets can be utilized where the amount of data is of great importance, e.g. for enabling the model to build an extensive understanding of the world. For these reasons, the second dataset may be larger than the first dataset and/or the third dataset. The second dataset may be at least one or two orders of magnitude larger than the first and/or third dataset.

In some embodiments, the method 100 further comprises generating S110, using the fine-tuned second machine learning model, a fourth dataset for use in subsequent training of the production model. The fourth dataset comprising sensor data samples depicting a physical environment which are annotated for the perception task. The method 100 may further comprise providing S112 the fourth dataset for subsequent training of the production model. By annotated for the perception task, it is herein meant that the predictions generated by the fine-tuned second machine learning model is used as annotation for the sensor data samples, and that the annotation is such that the production model can be trained to perform the perception task.

The fourth dataset may be generated S110 by obtaining S110a the sensor data samples pertaining to the physical environment. The sensor data samples may for instance be collected by a fleet of vehicles, which are transmitted to a server (or the like) tasked with performing the method 100.

The fourth dataset may be further generated S110 by generating S110b a prediction of the sensor data samples by processing the sensor data samples through the fine-tuned second machine learning model. Generating S110b the prediction can be understood as determining a perception output, by inputting a sensor data sample into the fine-tuned second machine learning model provided by the above described method 100. In other words, the prediction may be determined by feeding the sensor data samples to the fine-tuned second machine learning model. Since the fine-tuned second machine learning model is fine-tuned to perform the same perception task as the production model, it can generate a same type of output as the production model would output. More specifically, the prediction may e.g. comprise bounding boxes of objects detected in the sensor data samples, labels of identified objects, and/or a segmentation of the sensor data samples etc. The prediction of the fine-tuned second machine learning model may thus be used as annotation data for the sensor data samples. The predictions may be used as annotation data directly. However, in some embodiments, the prediction may be further processed before being used as annotation data. The fourth dataset may be further generated S110 by storing S110c the sensor data samples together with the prediction as annotation data for the subsequent training of the production model. The fourth dataset may thus be an automatically annotated dataset. The fourth dataset may be larger than the first and/or third dataset.

The method 100 may further comprise training S114 the production model using the fourth dataset. The production model may thus be trained S114 to perform the perception task.

In some embodiments, the first machine learning model and the production model are the same model. In such case, training the production model may comprise retraining, or fine-tuning, the first machine learning model using the fourth dataset. In other words, it may provide for further improvements to the performance of the first machine learning model.

The fine-tuned second machine learning model as provided according to what is described above can, thanks to its performance/capability, be able to perceive objects also in new or previously unseen scenarios or environments, thus making it possible to provide annotation data to a wide variety of scenes. This means that the fine-tuned second machine learning model becomes more capable for annotating data, than e.g. the first machine learning model, as it is merely trained on a limited training dataset of annotated data.

As a non-limiting example, if the fine-tuned second machine learning model is fine-tuned on a relatively small dataset (herein the third dataset) comprising examples of tractors in a country-side environment for example, it may still be able to recognize tractors in a city-environment, at least partly due to the pre-training of the second machine learning model on a relatively large dataset (herein the second dataset). Another kind of auto-annotation model trained only on a training dataset like the third training dataset describe above (such as the first machine learning model trained on the first dataset), may not be able to recognize a tractor in a new, previously unseen, scenario. It is to be appreciated that this simplified example merely serves for the purpose of illustrating the principles of the presently disclosed technology, and may not be representative of an actual case.

Executable instructions for performing these functions are, optionally, included in a non-transitory computer-readable storage medium or other computer program product configured for execution by one or more processors.

Generally speaking, a computer-accessible medium may include any tangible or non-transitory storage media or memory media such as electronic, magnetic, or optical media-e.g., disk or CD/DVD-ROM coupled to computer system via bus. The terms "tangible" and "non-transitory," as used herein, are intended to describe a computer-readable storage medium (or "memory") excluding propagating electromagnetic signals, but are not intended to otherwise limit the type of physical computer-readable storage device that is encompassed by the phrase computer-readable medium or memory. For instance, the terms "non-transitory computer-readable medium" or "tangible memory" are intended to encompass types of storage devices that do not necessarily store information permanently, including for example, random access memory (RAM). Program instructions and data stored on a tangible computer-accessible storage medium in non-transitory form may further be transmitted by transmission media or signals such as electrical, electromagnetic, or digital signals, which may be conveyed via a communication medium such as a network and/or a wireless link.

Figure 2 is a schematic illustration of a computing device 200, in accordance with some embodiments of the disclosed technology. The computing device 200 may be configured to perform the method 100 as described in connection with Fig. 1.

The computing device 200 as described herein for the purpose of this patent application, refers to a computer system, or any device configured to provide various computing services, data storage, processing capabilities, or resources to clients or users over a communication network. In the present case, the wording "clients" refers to connected vehicles (such as the vehicle 300 described below) of a fleet of vehicles. Thus, the computing device 200 as described herein may refer to a general computing device. The computing device 200 may be a server such as a remote server, cloud server, central server, back-office server, fleet server, or back-end server. Even though the computing device 200 is herein illustrated as one device, the computing device 200 may be a distributed computing system, formed by a number of different devices.

The computing device 200 comprises control circuitry 202. The control circuitry 202 may physically comprise one single circuitry device. Alternatively, the control circuitry 202 may be distributed over several circuitry devices.

As shown in the example of Fig. 2, the computing device 200 may further comprise a transceiver 206 and a memory 208. The control circuitry 202 being communicatively connected to the transceiver 206 and the memory 208. The control circuitry 202 may comprise a data bus, and the control circuitry 202 may communicate with the transceiver 206 and/or the memory 208 via the data bus.

The control circuitry 202 may be configured to carry out overall control of functions and operations of the computing device 200. The control circuitry 202 may include a processor 204, such as a central processing unit (CPU), microcontroller, or microprocessor. The processor 204 may be configured to execute program code stored in the memory 208, in order to carry out functions and operations of the computing device 200. The control circuitry 202 is configured to perform the steps of the method 100 as described above in connection with Fig. 1. The steps may be implemented in one or more functions stored in the memory 208.

The transceiver 206 is configured to enable the computing device 200 to communicate with other entities, such as vehicles or other devices. The transceiver 206 may both transmit data from and receive data to the computing device 200.

The memory 208 may be a non-transitory computer-readable storage medium. The memory 208 may be one or more of a buffer, a flash memory, a hard drive, a removable media, a volatile memory, a non-volatile memory, a random access memory (RAM), or another suitable device. In a typical arrangement, the memory 208 may include a non-volatile memory for long-term data storage and a volatile memory that functions as system memory for the computing device 200. The memory 208 may exchange data with the circuitry 202 over the data bus. Accompanying control lines and an address bus between the memory 208 and the circuitry 202 also may be present.

Functions and operations of the computing device 200 may be implemented in the form of executable logic routines (e.g., lines of code, software programs, etc.) that are stored on a non-transitory computer readable recording medium (e.g., the memory 208) of the computing device 200 and are executed by the circuitry 202 (e.g., using the processor 204). Put differently, when it is stated that the circuitry 202 is configured to execute a specific function, the processor 204 of the circuitry 202 may be configured execute program code portions stored on the memory 208, wherein the stored program code portions correspond to the specific function. Furthermore, the functions and operations of the circuitry 202 may be a stand-alone software application or form a part of a software application that carries out additional tasks related to the circuitry 202. The described functions and operations may be considered a method that the corresponding device is configured to carry out, such as the method 100 discussed above in connection with Fig. 1. In addition, while the described functions and operations may be implemented in software, such functionality may as well be carried out via dedicated hardware or firmware, or some combination of one or more of hardware, firmware, and software. In the following, the function and operations of the computing device 200 is described.

The control circuitry 202 is configured to obtain a second dataset comprising a set of sensor data sequences. Each sensor data sequence comprises sensor data samples depicting a physical environment over a plurality of time instances. Each sensor data sample having an associated annotation, generated by processing the sensor data sample through a first machine learning model being trained, using a first dataset, to perform a perception task. The perception task comprises generating a prediction of a sensor data sample for a given time instance, given said sensor data sample as input. This may be performed e.g. by execution of an obtaining function 210.

The control circuitry 202 is further configured to train, using the second dataset, a second machine learning model to perform an augmented perception task. The augmented perception task comprises generating a prediction of a sensor data sample for a time instance of a plurality of time instances of a sensor data sequence, given the remaining sensor data samples of said sensor data sequence as input. This may be performed e.g. by execution of a first training function 212.

The control circuitry 202 is further configured to fine-tune, using a third dataset, the second machine learning model, to perform the perception task. The third dataset comprises sensor data samples depicting a physical environment and that are annotated for the perception task. This may be performed e.g. by execution of a fine-tuning function 214.

The control circuitry 202 is further configured to provide the fine-tuned second machine learning model as a model for annotating training data for subsequent training of a production model to perform the perception task. The production model may be part of an automated driving system. This may be performed e.g. by execution of a first providing function 216.

The control circuitry 202 is further configured to generate, using the fine-tuned second machine learning model, a fourth dataset for use in subsequent training of the production model. The fourth dataset comprises sensor data samples depicting a physical environment and that is annotated for the perception task. This may be performed e.g. by execution of a generating function 218.

The control circuitry 202 is further configured to provide the fourth dataset for subsequent training of the production model. This may be performed e.g. by execution of a second providing function 220.

The control circuitry 202 is further configured to train the production model on the fourth dataset. This may be performed e.g. by execution of a second training function 222.

It should be noted that the principles, features, aspects, and advantages of the method 100 as described above in connection with Fig. 1, are applicable also to the computing device 200 as described herein. In order to avoid undue repetition, reference is made to the above.

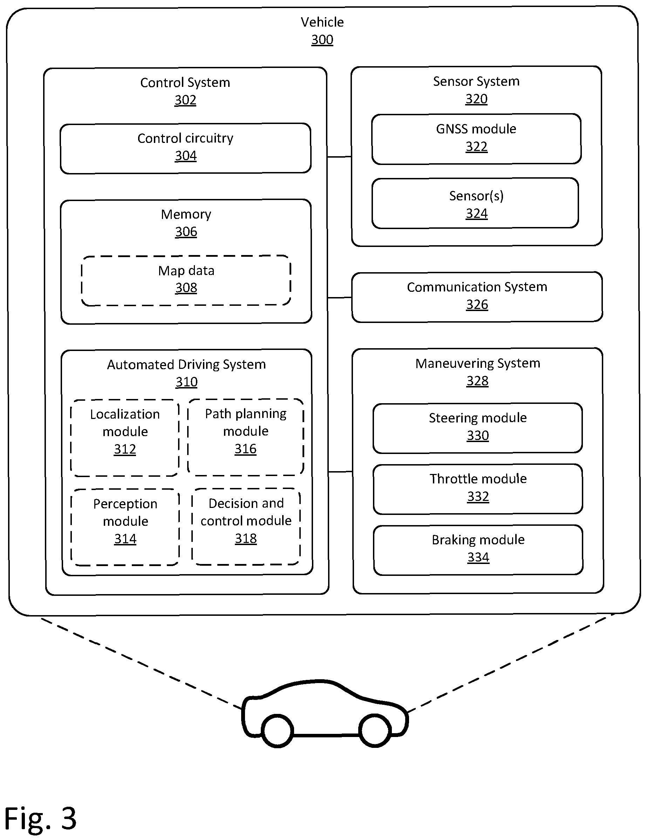

Figure 3 is a schematic illustration of a vehicle 300 in accordance with some embodiments. The vehicle 300 is equipped with an Automated Driving System (ADS) 310. As used herein, a "vehicle" is any form of motorized transport. For example, the vehicle 300 may be any road vehicle such as a car (as illustrated herein), a motorcycle, a (cargo) truck, a bus, a smart bicycle, etc.

The vehicle 300 comprises a number of elements which can be commonly found in autonomous or semi-autonomous vehicles. It will be understood that the vehicle 300 can have any combination of the various elements shown in Fig. 3. Moreover, the vehicle 300 may comprise further elements than those shown in Fig. 3. While the various elements are herein shown as located inside the vehicle 300, one or more of the elements can be located externally to the vehicle 300. Further, even though the various elements are herein depicted in a certain arrangement, the various elements may also be implemented in different arrangements, as readily understood by the skilled person. It should be further noted that the various elements may be communicatively connected to each other in any suitable way. The vehicle 300 of Fig. 3 should be seen merely as an illustrative example, as the elements of the vehicle 300 can be realized in several different ways.

The vehicle 300 comprises a control system 302. The control system 302 is configured to carry out overall control of functions and operations of the vehicle 300. The control system 302 comprises control circuitry 304 and a memory 306. The control circuitry 302 may physically comprise one single circuitry device. Alternatively, the control circuitry 302 may be distributed over several circuitry devices. As an example, the control system 302 may share its control circuitry 304 with other parts of the vehicle. The control circuitry 302 may comprise one or more processors, such as a central processing unit (CPU), microcontroller, or microprocessor. The one or more processors may be configured to execute program code stored in the memory 306, in order to carry out functions and operations of the vehicle 300. The processor(s) may be or include any number of hardware components for conducting data or signal processing or for executing computer code stored in the memory 306. In some embodiments, the control circuitry 304, or some functions thereof, may be implemented on one or more so-called system-on-a-chips (SoC). As an example, the ADS 310 may be implemented on a SoC. The memory 306 optionally includes high-speed random-access memory, such as DRAM, SRAM, DDR RAM, or other random-access solid-state memory devices; and optionally includes non-volatile memory, such as one or more magnetic disk storage devices, optical disk storage devices, flash memory devices, or other non-volatile solid-state storage devices. The memory 306 may include database components, object code components, script components, or any other type of information structure for supporting the various activities of the present description.

In the illustrated example, the memory 306 further stores map data 308. The map data 308 may for instance be used by the ADS 310 of the vehicle 300 in order to perform autonomous functions of the vehicle 300. The map data 308 may comprise high-definition (HD) map data. It is contemplated that the memory 308, even though illustrated as a separate element from the ADS 310, may be provided as an integral element of the ADS 310. In other words, according to some embodiments, any distributed or local memory device may be utilized in the realization of the present inventive concept. Similarly, the control circuitry 304 may be distributed e.g. such that one or more processors of the control circuitry 304 is provided as integral elements of the ADS 310 or any other system of the vehicle 300. In other words, according to an exemplary embodiment, any distributed or local control circuitry device may be utilized in the realization of the disclosed technology.

The vehicle 300 further comprises a sensor system 320. The sensor system 320 is configured to acquire sensory data about the vehicle itself, or of its surroundings. The sensor system 320 may for example comprise a Global Navigation Satellite System (GNSS) module 322 (such as a GPS) configured to collect geographical position data of the vehicle 300. The sensor system 320 may further comprise one or more sensors 324. The one or more sensor(s) 324 may be any type of on-board sensors, such as cameras, LIDARs and RADARs, ultrasonic sensors, gyroscopes, accelerometers, odometers etc. The one or more sensor(s) 324 may thus be used for collecting sensor data samples, or sequences depicting a physical surrounding environment of the vehicle 300, that can be used as training data. It should be appreciated that the sensor system 320 may also provide the possibility to acquire sensory data directly or via dedicated sensor control circuitry in the vehicle 300.

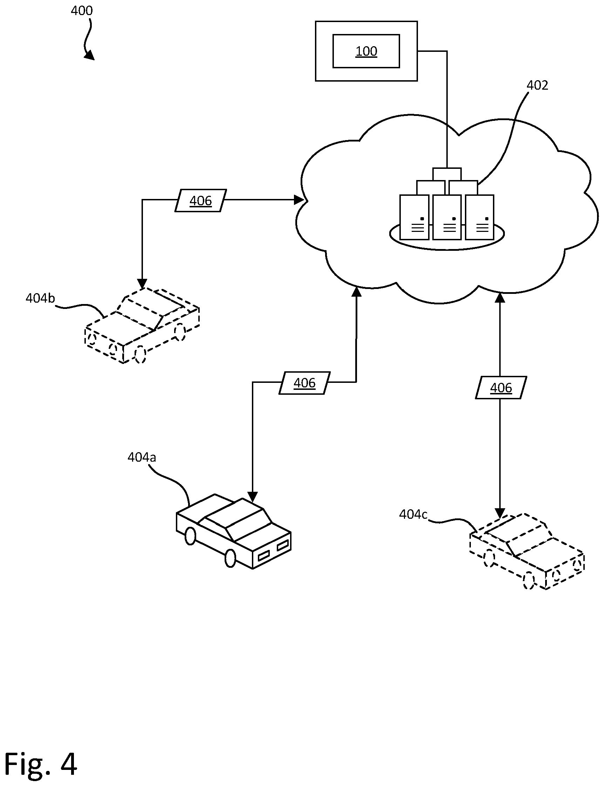

The vehicle 300 further comprises a communication system 326. The communication system 326 is configured to communicate with external units, such as other vehicles (i.e. via vehicle-to-vehicle (V2V) communication protocols), remote servers (e.g. cloud servers as the devices described above in connection with Fig. 3 and 4), databases or other external devices, i.e. vehicle-to-infrastructure (V2I) or vehicle-to-everything (V2X) communication protocols. The communication system 326 may communicate using one or more communication technologies. The communication system 326 may comprise one or more antennas. Cellular communication technologies may be used for long-range communication such as to remote servers or cloud computing systems. In addition, if the cellular communication technology used have low latency, it may also be used for V2V, V2I or V2X communication. Examples of cellular radio technologies are GSM, GPRS, EDGE, LTE, 5G, 5G NR, and so on, also including future cellular solutions. However, in some solutions mid to short-range communication technologies may be used such as Wireless Local Area (LAN), e.g. IEEE 802.11 based solutions, for communicating with other vehicles in the vicinity of the vehicle 300 or with local infrastructure elements. ETSI is working on cellular standards for vehicle communication and for instance 5G is considered as a suitable solution due to the low latency and efficient handling of high bandwidths and communication channels.

The communication system 326 may further provide the possibility to send output to a remote location (e.g. remote server, operator or control center) by means of the one or more antennas. Moreover, the communication system 326 may be further configured to allow the various elements of the vehicle 300 to communicate with each other. As an example, the communication system may provide a local network setup, such as CAN bus, I2C, Ethernet, optical fibers, and so on. Local communication within the vehicle may also be of a wireless type with protocols such as WiFi, LoRa, Zigbee, Bluetooth, or similar mid/short range technologies.

The vehicle 300 further comprises a maneuvering system 320. The maneuvering system 328 is configured to control the maneuvering of the vehicle 300. The maneuvering system 328 comprises a steering module 330 configured to control the heading of the vehicle 300. The maneuvering system 328 further comprises a throttle module 332 configured to control actuation of the throttle of the vehicle 300. The maneuvering system 328 further comprises a braking module 334 configured to control actuation of the brakes of the vehicle 300. The various modules of the steering system 328 may receive manual input from a driver of the vehicle 300 (i.e. from a steering wheel, a gas pedal and a brake pedal respectively). However, the maneuvering system 328 may be communicatively connected to the ADS 310 of the vehicle, to receive instructions on how the various modules should act. Thus, the ADS 310 can control the maneuvering of the vehicle 300.

As stated above, the vehicle 300 comprises an ADS 310. The ADS 310 may be part of the control system 302 of the vehicle. The ADS 310 is configured to carry out the functions and operations of the autonomous functions of the vehicle 300. The ADS 310 can comprise a number of modules, where each module is tasked with different functions of the ADS 310.

The ADS 310 may comprise a localization module 312 or localization block/system. The localization module 312 is configured to determine and/or monitor a geographical position and heading of the vehicle 300, and may utilize data from the sensor system 320, such as data from the GNSS module 322. Alternatively, or in combination, the localization module 312 may utilize data from the one or more sensors 324. The localization system may alternatively be realized as a Real Time Kinematics (RTK) GPS in order to improve accuracy.

The ADS 310 may further comprise a perception module 314 or perception block/system. The perception module 314 may refer to any commonly known module and/or functionality, e.g. comprised in one or more electronic control modules and/or nodes of the vehicle 300, adapted and/or configured to interpret sensory data - relevant for driving of the vehicle 300 - to identify e.g. obstacles, vehicle lanes, relevant signage, appropriate navigation paths etc. The perception module 314 may thus be adapted to rely on and obtain inputs from multiple data sources, such as automotive imaging, image processing, computer vision, and/or in-car networking, etc., in combination with sensory data e.g. from the sensor system 320. The production model, as referred to above, may be provided as part of the ADS 310, or more specifically as part of the perception module 314.

The localization module 312 and/or the perception module 314 may be communicatively connected to the sensor system 320 in order to receive sensor data from the sensor system 320. The localization module 312 and/or the perception module 314 may further transmit control instructions to the sensor system 320.

The ADS may further comprise a path planning module 316. The path planning module 316 is configured to determine a planned path of the vehicle 300 based on a perception and location of the vehicle as determined by the perception module 314 and the localization module 312 respectively. A planned path determined by the path planning module 316 may be sent to the maneuvering system 328 for execution.

The ADS may further comprise a decision and control module 318. The decision and control module 318 is configured to perform the control and make decisions of the ADS 310. For example, the decision and control module 318 may decide on whether the planned path determined by the path-planning module 316 should be executed or not. The decision and control module 318 may be further configured to detect any deviating behavior of the vehicle, such as deviations from the planned path, or expected trajectory of the path planning module 316. This includes both evasive maneuvers performed by the ADS 310 and by a driver of the vehicle.

It should be understood that parts of the described solution may be implemented either in the vehicle 300, in a system located external to the vehicle, or in a combination of internal and external to the vehicle; for instance, in a server in communication with the vehicle, a so-called cloud solution. The different features and principles of the embodiments may be combined in other combinations than those described. Further, the elements of the vehicle 300 (i.e. the systems and modules) may be implemented in different combinations than those described herein.

Figure 4 illustrates, by way of example, a system 400 according to some embodiments. The system 400 should be seen as a non-limiting example of a realization of the herein disclosed aspects of the present inventive concept. For instance, the system 400 is configured to perform the method 100 as described above in connection with Fig. 1. Thus, any features or principles described above are applicable also to the system 400 as described herein and vice versa, unless otherwise stated.

The system 400 comprises a server 402 (or remote, cloud, central, back-office, fleet, or back-end server), referred to in the following as the remote server 402 or just server 402. The server 402 may comprise the device 200 as described in connection with Fig. 2. In other words, the server 402 may be configured to perform the functions of the above described device 200. Thus, the server 402 may be configured to perform the method 100 as described in connection with Fig. 1. As illustrated, the server 402 may be provided in the cloud, i.e. as a cloud-implemented server.

The system 400 further comprises one or more vehicles 404a-c, also referred to as a fleet of vehicles. The one or more vehicles 404a-c may be vehicles 300 as described above in connection with Fig. 3.

The one or more vehicles 404a-c are communicatively connected to the remote server 402 for transmitting and/or receiving data 406 between the vehicles and the server. The one or more vehicles 404a-c may be further communicatively connected to each other. The data 406 may be any kind of data, such as communication signals, or sensor data. The communication may be performed by any suitable wireless communication protocol. The wireless communication protocol may e.g. be long range communication protocols, such as cellular communication technologies (e.g. GSM, GPRS, EDGE, LTE, 5G, 5G NR, etc.) or short to mid-ranged communication protocols, such as Wireless Local Area (LAN) (e.g. IEEE 802.11) based solutions. The sever 402 comprises a suitable memory and control circuitry, for example, one or more processors or processing circuitry, as well as one or more other components such as a data interface and transceiver. The server 402 may also include software modules or other components, such that the control circuity can be configured to execute machine-readable instructions loaded from memory to implement the steps of the method to be performed.

The fleet illustrated in Fig. 4 comprises three vehicles, a first, second and third vehicle 404a-c, by way of example. The system 400 may however comprise any number of vehicles 404a-c. In the following, the system 400 will be described mainly with reference to the first vehicle 404a. It is to be understood that the principles apply to any vehicle of the fleet of vehicles.

The one or more vehicles 404a-c may be used for sensor data collection. The collected sensor data can then be transmitted to the server 402 and used as training data samples. The server 402 may in turn be configured to manage the different datasets as described above, and for providing a trained production model. The trained production model can then be deployed in the fleet of vehicles.

The above-described process of the system 400 is to be understood as a non-limiting example of the presently disclosed technology for improved understanding. Further variants are apparent from the present disclosure and readily realized by the person skilled in the art.

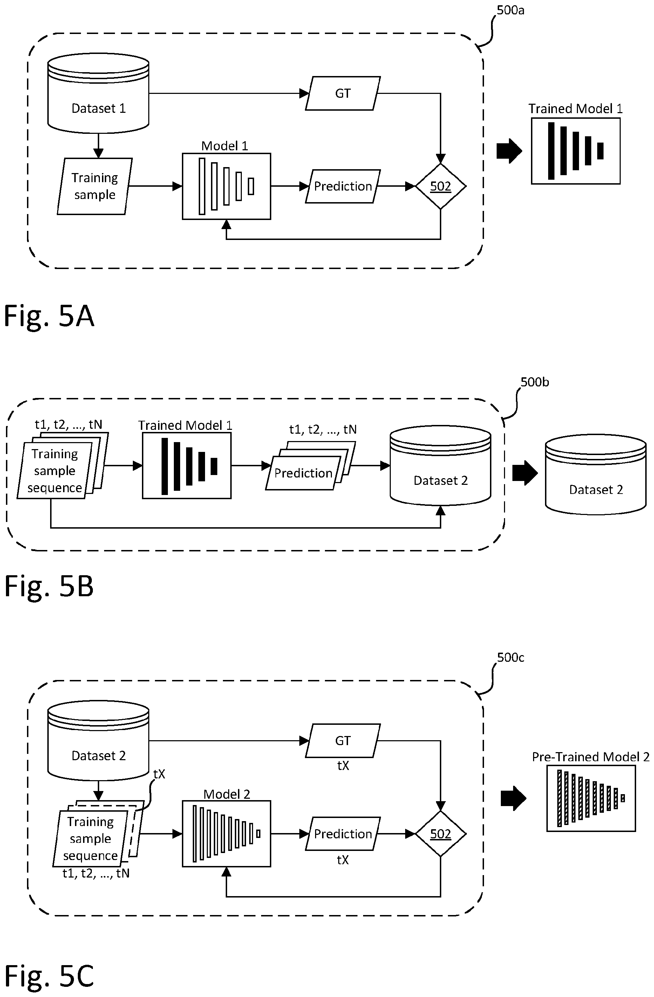

Figures 5A to 5F illustrates, by way of example, schematic diagrams over different sub-processes of the disclosed technology. More specifically, the illustrations show an example of data flows and the results of each process.

Fig. 5A shows a diagram of a first process 500a. Namely the process of how the first machine learning model (Model 1), as mentioned above, can be obtained. Given is a first dataset (Dataset 1) of manually labeled training samples. Each training sample being labeled (or annotated) for a specific perception task. Model 1 can then be trained through an ordinary training scheme using e.g. supervised learning. More specifically, training samples are processed through the first machine learning model which generates a prediction. The prediction is then compared (comparison-block 502) to a label corresponding to the training sample, i.e. a ground truth (GT). Based on this comparison, the first machine learning model (e.g. learnable weights thereof) can be updated. This process can be repeated until a defined criterion has been met (e.g. a convergence criterion or performance criterion reaching a certain level, or until the model has been trained on all available training data in Dataset 1). The result being a trained Model 1.

The first dataset may be a limited dataset of manually annotated training data. The first dataset may thus be a relatively small dataset.

Fig. 5B shows a diagram of a second process 500b, namely the process of generating the second dataset (Dataset 2). The trained Model 1, obtained e.g. through the first process 500a of Fig. 5A, can be used. More specifically, sequences of training samples (or Training sample sequences) can be processed by the Trained Model 1, which generates corresponding predictions of each training sample. The training sample sequences can then be stored together with their corresponding predictions, to form Dataset 2. The process 500b described herein, together with the process 500a described above in connection with Fig. 5A, illustrates one example of how the second dataset can be obtained, i.e. step S102 described above in connection with Fig. 1.

Each training sample sequence herein comprises a sensor data sequence (or sequence of sensor data). More specifically, the sensor data sequence comprises sensor data samples depicting the physical surrounding environment of a vehicle, over a plurality of time instances t1 to tN, where N is a positive integer greater than 1. The sensor data sequence may e.g. sensor frames, captured over a certain time period, with a certain frame rate. The resulting dataset 2 thus comprises a set of such sensor data sequences. Each sensor data sample being associated with a respective annotation, generated by processing the sensor data sample through the first machine learning model. Thus, trained Model 1 generates one prediction for each time instance t1 to tN. The predictions are then used as annotation data (or labels) for the corresponding sensor data sample. Even though the Training sample sequence is herein illustrated as being input to the trained Model 1 together, each sensor data sample may be processed individually, i.e. one after the other. It is further to be noted that even though sequences of sensor data samples are processed, the task performed by the trained Model 1 is still the same perception task as it was trained to do in the first process 500a described above, i.e. generating a prediction of a sensor data sample, given said sensor data sample as input. This can be referred to as performing the perception task in current time, or performing present time predictions.

Compared to the first dataset, the second dataset may be a relatively large dataset. As the annotations are generated in an automated manner, the size of the second dataset is only limited by the amounts of data that can be collected, and the computational resources available for running the first machine learning model. Both of which are readily available compared to the resources for manual annotation, which is the limiting factor in obtaining the first dataset.

Fig. 5C shows a diagram of a third process 500c, namely the process of training (or rather pre-training) a second machine learning model (Model 2). This is thus an example of the step denoted S104, as described above in connection with Fig. 1.

The perception task that Model 1 is trained to perform in the first process 500a, and that it performs in the second process 500b to generate Dataset 2 can be referred to as the main perception task. The second machine learning model is then trained to perform an augmented (or auxiliary) perception task. The augmented perception task involves doing prediction of a sensor data sample for a certain time instance, given sensor data samples of past and/or future time instances. It is to be noted that the underlying prediction to be generated are the same as of Model 1 (e.g. object detection, object classification, etc.). The difference being that it makes predictions for a time instance different from what the model is given (e.g. past or future, or anything in between). Thereby, the augmented task is very much aligned with the main task, while allowing the second model to learn complex dependencies and dynamics of the physical world that evolve over time, as the second machine learning model can learn how objects are expected to move between time instances. The second machine learning model may be characterized by its relatively large model size. As explained in the forgoing, a large model may herein refer e.g. to the number of learnable parameters, higher resolution, number of layers, type or complexity of layers, larger temporal context, etc. The model size and complexity may contribute to its ability to capture intricate patterns and representations from extensive datasets. More specifically, Model 2 may be larger than Model 1 (as well as larger than Model 3 described below). In the illustrated example, the relative size of the models (Model 1, Model 2 and Model 3) are indicated by the illustrated number of layers. However, this is only for illustrative purposes, and shall not be seen as limiting to the actual number of layers (or other aspects affecting the size) of the models.

As seen in Fig. 5C, the second dataset is used in the training of Model 2. A training instance herein corresponds to a sensor data sequence from t1 to tN, where one (or more) sensor data sample(s) are withheld from the model. The second machine learning model is then tasked with generating a prediction to the sensor data sample (or samples) that has been withheld. Herein the label tX is used to represent a time instance which Model 2 is to generate a prediction for, and the corresponding sensor data sample that is withheld is represented by broken lines. Similar to the training procedure in the first process 500a, the prediction generated for time instance tX is compared to a ground truth (GT) for the same time instance tX, which is available in the second dataset. Based on a comparison between the prediction and the GT, the second machine learning model can be updated. The process 500c can then be repeated until a defined criterion has been met. As a result, a trained Model 2 can be obtained. As will be further explained above, the second machine learning model can later on be fine-tuned. Thus, the Trained Model 2 can also be referred to a pre-trained Model 2.

The time instance to be predicted (i.e. tX) can for instance be the last time instance of the sensor data sequence. The task of Model 2 can thus be seen as generating a prediction into the future, given the sensor data samples of past time instances. In another example, the time instance to be predicted can be the first time instance of the sensor data sequence. The task of Model 2 can thus be seen as generating a prediction into the past, given the sensor data samples of later time instances. In yet another example, the time instance to be predicted can be a time instance between the first and last time instance. Thus, the task of Model 2 can be seen as generating a prediction for an intermediate time instance, given sensor data samples of both past and future. It is to be appreciated that any combination of the above is possible as well. Thereby, the same training sample sequence can be used multiple times during training, by withholding different sensor data samples each time.

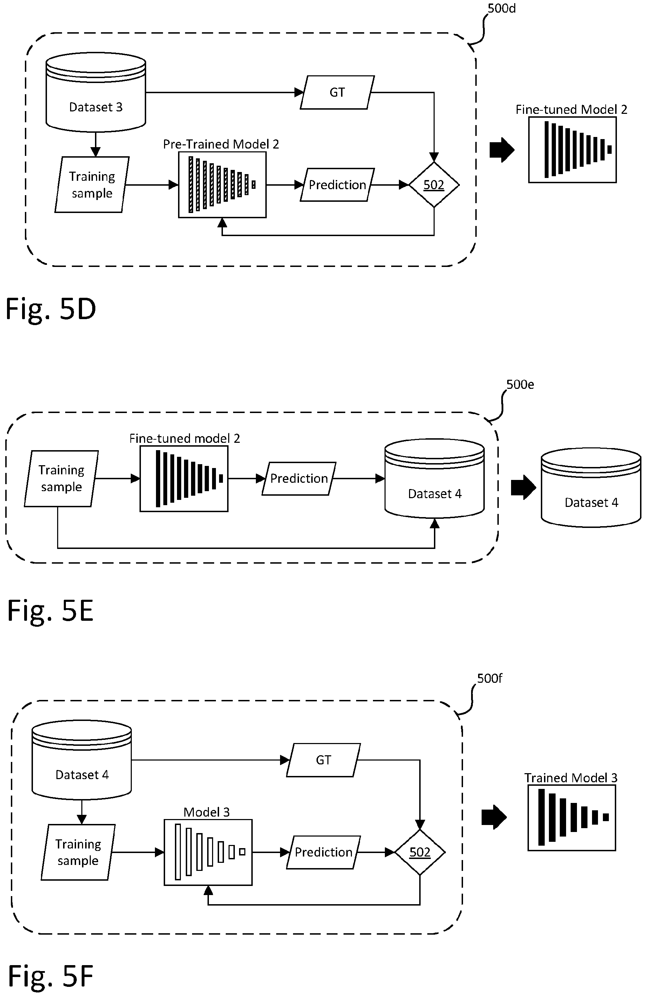

Fig. 5D shows a diagram of a fourth process 500d, namely the process of fine-tuning the second machine learning model (Model 2). This is thus an example of the step denoted S106, as described above in connection with Fig. 1.

The pre-trained model 2 is fine-tuned to perform the main perception task. This can be done using a third dataset (Dataset 3) with training samples annotated for the main perception task. More specifically, the third dataset may comprise sensor data samples depicting a physical environment. Each sensor data sample having associated annotation data (such as one or more labels, bounding boxes, etc.). The third dataset may be a manually annotated dataset. As manually annotated data are typically of high quality (e.g. in terms of accuracy), this can aid in ensuring that the fine-tuning of the pre-trained model 2 can be done as good as possible. The third dataset can be the same as the first dataset. In other words, the first dataset can be reused for the fine-tuning of the pre-trained model 2. In other examples, the third dataset may be partly overlapping with the first dataset, or a completely different dataset.

Fine-tuning the pre-trained model 2 can then be done in a similar manner as in the first process 500a, i.e. comparing a generated prediction with a GT, and updating the model based on the comparison. The results being a Fine-tuned Model 2. The fine-tuned second machine learning model may then be provided as a model for annotating training data for subsequent training of a production model. This will be further exemplified in Fig. 5E and 5F below. It is contemplated that as part of the fine-tuning, the architecture of the pre-trained Model 2 may be altered, e.g. by adding or removing some layers of the model. For example, a task-specific head can be added.

Fig. 5E shows a diagram of a fifth process 500e, namely the process of generating a fourth dataset of annotated training data. This is thus an example of the step denoted S110, as described above in connection with Fig. 1. The fine-tuned Model 2, obtained e.g. through the fourth process 500d of Fig. 5D, can be used. The fourth dataset can then be used in subsequent training of a production model (see Fig. 5F below).

In some embodiments, training samples (in the form of sensor data samples) can be processed by the Fine-tuned Model 2, which generates corresponding predictions for each sample. The predictions are then used as annotation data (or labels) for the corresponding sensor data samples. The training samples can then be stored together with their corresponding predictions, to form Dataset 4. The training samples may e.g. be the same training samples as in the second dataset (Dataset 2). However, by using the Fine-tuned Model 2, the predictions used for annotations can be generated by higher accuracy, than what the Trained Model 1 is able to generate. It is however to be appreciated that the training samples may be different from those used for the second dataset.

In some embodiments, the fourth dataset is formed by a set of annotated sensor data sequences. In other words, sensor data sequences can be processed (like in the second process 500b of Fig. 5B) through the fine-tuned second machine learning model. The fine-tuned second machine learning model can either generate one prediction for the entire sequence, or one prediction for each sensor data sample of the sensor data sequence. The possibility of auto-annotation is of particular advantage when it comes to annotating sequences of sensor data, as the cost of manually annotating such data is even higher than individual sensor data samples.

As realized by the skilled person, the kind of annotated training data that is generated for the fourth dataset can depend on how the production model to be trained on the fourth dataset are intended to operate. The production model can for instance operate on individual frames (i.e. a spatial model), or on a sequence of frames (i.e. spatiotemporal models). However, in any case, the data is annotated for the main perception task of generating predictions for the sensor data that the model is given (as opposed to the future prediction that is the augmented perception task). It is to be noted that spatiotemporal models typically operate on a couple of frames, e.g. over a time horizon ranging from a few hundred milliseconds, up to a few seconds. In comparison, the training sample sequences, used e.g. in the pre-training of Model 2, may range from a few seconds up to several seconds. For example, in the range of 0.1 to 60 seconds. Or more specifically, in the range of 3 to 10 seconds.

Fig. 5F shows a diagram of a sixth process 500f, namely the process of training the production model (Model 3) to perform the perception task. This is thus an example of the step denoted S114, as described above in connection with Fig. 1. The sixth process 500f can result in a trained production model (or trained model 3).

The production model may be trained in a similar way as the first machine learning model, as described above. However, using the fourth dataset which comprises a much larger number of training samples, the resulting model can be more performant. Alternatively, or in combination, the production model may be trained as a spatiotemporal model, as explained in the forgoing, meaning each training sample is a sequence of sensor data. The production model is then trained to generate a prediction for the entire sequence of sensor data.

In the illustrated example, the first machine learning model and the third machine learning model are two different models. The two models may e.g. differ in their architecture or size. This is indicated in the illustrated example through the number of layers of the models. However, in some embodiments, the first machine learning model and the third machine learning model (i.e. the production model) may be the same model. In such case, the sixth process 500f may be the process of re-training or fine-tuning Model 1, on a different dataset (i.e. the fourth dataset). Thereby, the overall process from the first to the sixth can be seen as a process of improving a machine learning model (i.e. the first machine learning model).

The present invention has been presented above with reference to specific embodiments. However, other embodiments than the above described are possible and within the scope of the invention. Different method steps than those described above, performing the methods by hardware or software, may be provided within the scope of the invention. Thus, according to an exemplary embodiment, there is provided a non-transitory computer-readable storage medium storing one or more programs configured to be executed by one or more processors of a vehicle control system, the one or more programs comprising instructions for performing the methods according to any one of the above-discussed embodiments. Alternatively, according to another exemplary embodiment a cloud computing system can be configured to perform any of the methods presented herein. The cloud computing system may comprise distributed cloud computing resources that jointly perform the methods presented herein under control of one or more computer program products.

It should be noted that any reference signs do not limit the scope of the claims, that the invention may be at least in part implemented by means of both hardware and software, and that the same item of hardware may represent several "means" or "units".

## Claims

1. A computer-implemented method (100) comprising:
obtaining (S102) a second dataset comprising a set of sensor data sequences, wherein each sensor data sequence comprises sensor data samples depicting a physical environment over a plurality of time instances, each sensor data sample having an associated annotation, generated by processing the sensor data sample through a first machine learning model being trained, using a first dataset, to perform a perception task, wherein the perception task comprises generating a prediction of a sensor data sample for a given time instance, given said sensor data sample as input;
training (S104), using the second dataset, a second machine learning model to perform an augmented perception task, wherein the augmented perception task comprises generating a prediction of a sensor data sample for a time instance of a plurality of time instances of a sensor data sequence, given the remaining sensor data samples of said sensor data sequence as input;
fine-tuning (S106), using a third dataset, the second machine learning model, to perform the perception task, wherein the third dataset comprises sensor data samples depicting a physical environment and that are annotated for the perception task; and
providing (S108) the fine-tuned second machine learning model as a model for annotating training data for subsequent training of a production model, of an automated driving system, to perform the perception task.

2. The method (100) according to claim 1, wherein the second dataset is an automatically annotated dataset, and
wherein the first dataset and/or the third dataset are a manually annotated datasets.

3. The method (100) according to claim 1 or 2, wherein the second dataset is larger than the first dataset and/or the third dataset.

4. The method (100) according to any one of the claims 1 to 3, further comprising generating (S110), using the fine-tuned second machine learning model, a fourth dataset for use in subsequent training of the production model, wherein the fourth dataset comprises sensor data samples depicting a physical environment and that is annotated for the perception task; and
providing (S112) the fourth dataset for subsequent training of the production model.

5. The method (100) according to claim 4, wherein the fourth dataset is generated (S110) by:
obtaining (S110a) the sensor data samples pertaining to the physical environment;
generating (S110b) a prediction of the sensor data samples by processing the sensor data samples through the fine-tuned second machine learning model; and
storing (S110c) the sensor data samples together with the prediction as annotation data for the subsequent training of the production model.

6. The method (100) according to claim 4 or 5, wherein the fourth dataset is an automatically annotated dataset.

7. The method (100) according to any one of the claims 4 to 6, wherein the fourth dataset is larger than the first dataset and/or the third dataset.

8. The method (100) according to any one of the claims 4 to 7, further comprising training (S114) the production model on the fourth dataset.

9. The method (100) according to any one of the claims 1 to 8, wherein the second machine learning model is larger than the production model.

10. The method (100) according to any one of the claims 1 to 9, wherein the first machine learning model and the production model are the same model.

11. The method (100) according to any one of the claims 1 to 10, wherein the perception task is one of object detection, object classification, object tracking, lane estimation, free-space estimation, trajectory prediction, obstacle avoidance, path planning, scene classification, traffic sign classification, 3D scene flow, and occupancy prediction.

12. The method (100) according to any one of the claims 1 to 11, wherein the sensor data comprises one or more of image data, LIDAR data, radar data, and ultrasonic data.

13. A computer program product comprising instructions, which when the program is executed by a computing device, causes the computing device to carry out the method (100) according to any one of the claims 1 to 12.

14. A computing device (200) comprising control circuitry (202) configured to:
obtain a second dataset comprising a set of sensor data sequences, wherein each sensor data sequence comprises sensor data samples depicting a physical environment over a plurality of time instances, each sensor data sample having an associated annotation, generated by processing the sensor data sample through a first machine learning model being trained, using a first dataset, to perform a perception task, wherein the perception task comprises generating a prediction of a sensor data sample for a given time instance, given said sensor data sample as input;
train, using the second dataset, a second machine learning model to perform an augmented perception task, wherein the augmented perception task comprises generating a prediction of a sensor data sample for a time instance of a plurality of time instances of a sensor data sequence, given the remaining sensor data samples of said sensor data sequence as input;
fine-tune, using a third dataset, the second machine learning model, to perform the perception task, wherein the third dataset comprises sensor data samples depicting a physical environment and that are annotated for the perception task; and
provide the fine-tuned second machine learning model as a model for annotating training data for subsequent training of a production model, of an automated driving system, to perform the perception task.
